# EUROPEAN PATENT APPLICATION

(11) **EP 3 109 716 A1**
(43) Date of publication of application: **28.12.2016**
(21) Application number: 15201390.0
(22) Date of filing: 18.12.2015
(51) Int. Cl.: G05B 19/042, F03D 17/00, F03D 1/00

(54) **A METHOD AND A SYSTEM FOR DIAGNOSING STRUCTURAL ELEMENTS OF A WIND FARM**

(30) Priority: 26.06.2015 PL 41287715
(71) Applicant: Politechnika Slaska, 44-100 Gliwice (PL)
(72) Inventor: MOCZULSKI, Wojciech, 44-160 Rudno (PL); JANUSZKA, Marcin, 44-100 Gliwice (PL); PANFIL, Wawrzyniec, 44-207 Rybnik (PL); PRZYSTALKA, Piotr, 43-602 Jaworzno (PL)
(74) Representative: Sielewiesiuk, Jakub

(57) **Abstract**

The method for diagnosing the structural elements of the wind farm, characterised in that the inspection of the wind farm is carried out in an autonomous manner, wherein the diagnostic system management module (5), on the basis of the current data on the load and operation, as well as the data derived from the inspection of the structural elements, as well as the historical data stored in the historical database (9) and the weather database (11), plans in details the control tasks wirelessly controls: the specialised inspection robot for inspecting the wind turbine blades (1), the specialised inspection robot for inspecting the wind turbine tower (2), the specialised transport robot (3) and the wind turbine's (4) turbine set in order to allow the inspection.

The system for diagnosing the structural elements of the wind farm, characterised in that one of its components is the diagnostic system management module (5), which using the communication system (8) wirelessly transmits control signals through the communication system (1.2) to the control system (1.1), which are located in the specialised inspection robot for inspecting the wind turbine blades (1), and through the communication system (2.2) to the control system (2.1), which are located in the specialised inspection robot for inspecting the wind turbine tower (2), and through the communication system (3.2) to the control system (3.1), which are located in the specialised transport robot (3), and through the communication system (4.2) to the control system (4.1), which are located on the wind turbine (4).

## Description

The subject of the present invention is the method and the system for diagnosing the structural elements of the wind farm.

There is known the solution described in the US Patent No. DE 102012003513 B3, where in the process of diagnosing wind turbines there is used the method for evaluating wind turbine structures, according to which there is used an aircraft with a device recording thermographic images mounted.

In another known solution presented in the US Patent No. 20120136630 A1, for inspecting wind turbines there is used at least one remotely controlled aircraft with a device for conducting non-destructive tests and a distance measurement device mounted.

There is also known a commercial solution called AutoCopter™, presented, among others, in the publication *Automated Turbine Inspection* (Author: Donald Effren). This solution is used for remote inspection of wind turbines and is also based on an unmanned helicopter.

Furthermore, there is known the solution of automated Como-ADS system for diagnosing individual wind power plants and entire farms shown on the manufacturer's (CoMoSystems) website. The Como-ADS system acts like a diagnostic centre, which is located inside the nacelle of the wind turbine and continuously monitors operating conditions of the wind turbines, as well as automatically manages the operation of the turbine.

The aim of the present invention is to improve methods for diagnosing wind turbines and enabling carrying out of the diagnostic process in an autonomous manner for the entire wind farm. The specific objective is to eliminate the need for diagnostic specialists to participate in the process of diagnosing a wind farm in marine conditions, while limiting their role to additional analysis and evaluation of data stored by a diagnostic system in an autonomous mode of operation.

The method according to the invention involves carrying out the inspection of the wind farm in an autonomous manner, wherein a diagnostic system management module, on the basis of the current data regarding loads and operation, as well as data from the inspection of structural elements, as well as historical data stored in the historical database and the weather database, plans in detail control tasks and wirelessly controls: a specialised inspection robot for inspecting the wind turbine blades, a specialised inspection robot for inspecting the wind turbine tower, a specialised transport robot and a wind farm turbine set enabling carrying out of the inspection.

The transport robot autonomously performs transportation of teams consisting of inspection robot for inspecting the wind turbine blades and inspection robot for inspecting the wind turbine tower between the wind turbines at the wind farm, as well as their unloading and loading by means of a loading and unloading executive system.

The inspection robot for inspecting the wind turbine tower performs transportation of the inspection robot for inspecting the blades to the inspection start point, and the diagnostic system management module controls a suitable arrangement of the wind turbine blades in order to place the inspection robot on the wind turbine blade.

The system according to the invention is characterised in that its component is the diagnostic system management module that using the communication system wirelessly transmits control signals through the communication system to the control system, which are located in the specialised inspection robot for inspecting the wind turbine blades, and through the communication system to the control system, which are located in the specialised inspection robot for inspecting the wind turbine tower, and by the communication system to the control system, which are located in the specialised transport robot, and through the communication system to the control system, which are located on the wind turbine. One of the components of the system is a data acquisition and processing module, which for the purposes of the diagnostic system management module and by means of the communication system wirelessly receives the wind turbine inspection data through the communication system from the data acquisition and storage module, which is located in on the specialised inspection robot for inspecting the wind turbine blades, and through the communication system from the data acquisition and storage module, which is located in on the specialised inspection robot for inspecting the wind turbine tower.

An advantage of the solution according to the invention is the ability to autonomously diagnose the structural elements of the wind farm. In an autonomous manner there are performed both transportation tasks, consisting in the transportation of robots to the inspection site, and the inspection itself, carried out by the robots. The diagnostic system allows for the implementation of diagnostic tasks without human intervention, based on processed current and historical data on loads, diagnostic symptoms and weather data obtained by the data acquisition and processing system.

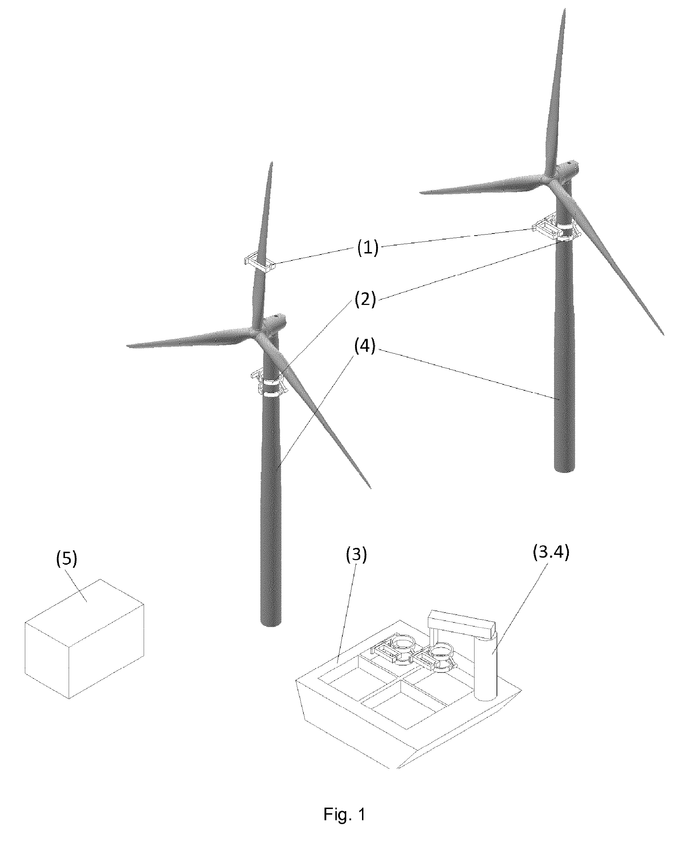

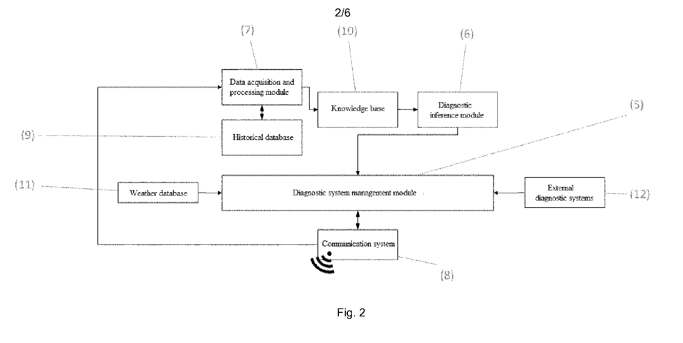

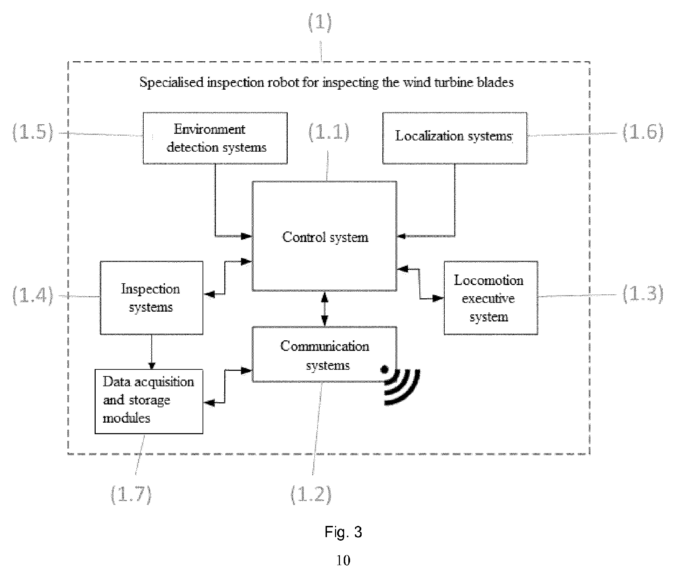

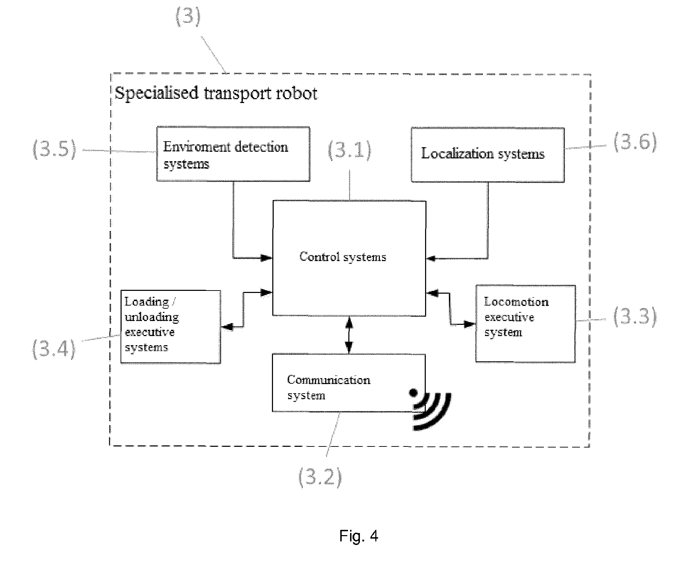

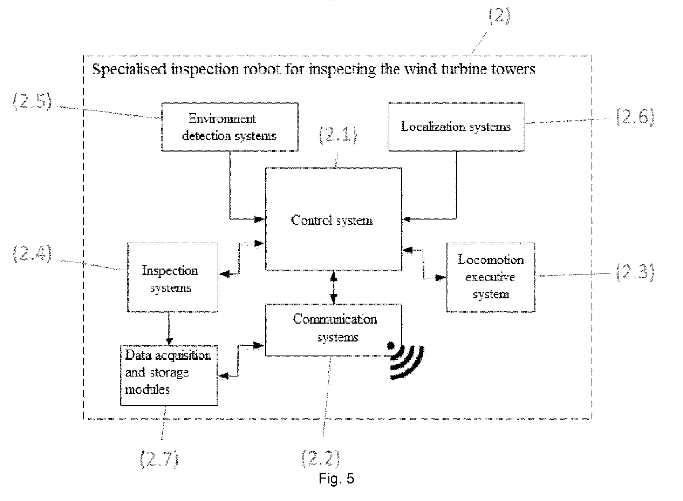

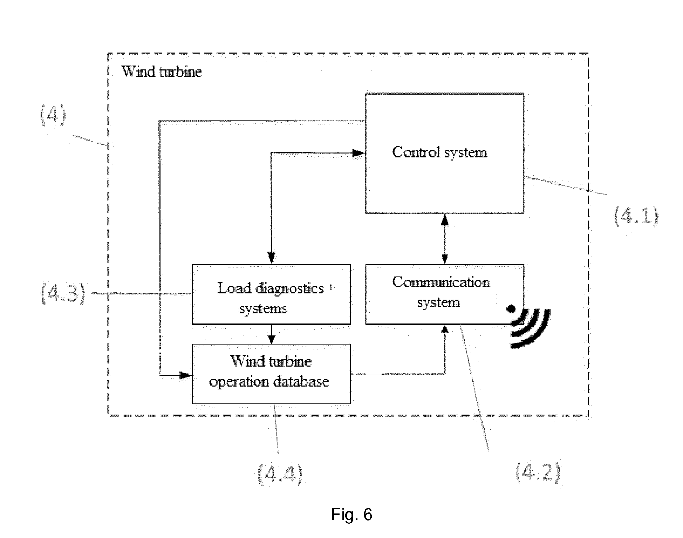

The subject of the present invention is illustrated in an embodiment in a drawing, in which Fig. 1 shows the basic elements of the system for diagnosing the structural elements of the wind farm, Fig. 2-6 shows arrangements of individual components of the system.

According to the invention, the specialised inspection robot for inspecting the wind turbine blades (1) moves using appropriate components of the locomotion executive system (1.3) on the surface of the turbine rotor blades and performs an active diagnosis of the damages to the blades. The control system of this robot is able to cooperate with the wind turbine control system (4.1), to cause an appropriate arrangement of the rotor blades, which helps in carrying out of the inspection while reducing consumption of energy required to move the robot.

The specialised inspection robot for inspecting the wind turbine tower (2), moving on the steel surface of the wind turbine tower using the locomotion executive system (2.3), is designed for inspecting the wind turbine's (4) tower and transporting the robot (1) from the point of arrival of the transport robot (3) to the base of the turbo generator nacelle console of the wind turbine (4). The inspection carried out by this robot may involve an evaluation of the material status, mechanical fatigue, damage to protective coatings, etc.

The specialised transport robot (3) provides teams of the inspection robots (1) and (2) to the inspection start point, which is located at the base of each wind turbine set's tower. The land version of the transport robot has a locomotion executive system (3.3) in the form of a chassis for moving between the farm units, while in the off-shore version it is a floating vehicle. The transport robot performs a transportation of the robots (1) and (2), their unloading from its storage space, and their taking (loading) to its storage space. Loading and unloading of the robots (1) and (2) is performed with the specialised loading and unloading executive system (3.4), which is located on the transport robot (3). The transport robot (3) after unloading a team of the inspection robots (1) and (2) on the first wind turbine (4), if necessary, moves to another wind turbine and performs an unloading of another team of robots in accordance with commands sent from the diagnostic system management module (5). After the carried out inspection, the transport robot performs a loading of the inspection robots to the storage space in the order imposed by the diagnostic system management module (5).

The diagnostic system management module (5) plans the performance of the diagnostic tasks (taking into account a weather forecast and a sea state forecast), and then controls the performance of the diagnostic tasks for individual wind turbine sets located in the wind farm. Controlling the specialised robots (1), (2) and (3), as well as the wind farm turbine sets, is performed through the wireless communication system (8). The corresponding commands are transmitted through the communication systems (1.2), (2.2) and (3.2) of the robots, and through the wind turbine communication system (4.2) to the control systems of the robots (1.1), (2.1) and (3.1), as well as to the wind farm turbine set (4.1). Commands transmitted to the turbine set control system allow it to stop, start and control the appropriate arrangement of the wind turbine blades in order to mount the inspection robot on the blade.

Operation of the invention allows planning diagnostic tasks and controlling their implementation through the diagnostic system management module (5). Planning and controlling the implementation of diagnostic tasks by the diagnostic system management module is implemented on the basis of the conclusions reached by a diagnostic inference module (6) using the history of operation of each diagnosed unit and current loads and diagnostic symptoms, obtained from the analysis of the signals observed using the inspection systems (1.4) and (2.4). The data on the loads are derived from the load diagnostics systems (4.3) of the wind turbines and are stored in a wind turbine operation database (4.4) and sent to the data acquisition and processing module (7). The data derived from the inspection systems of the specialised robots (1.4) and (2.4) are gathered and stored by the data acquisition and storage modules (1.7) and (2.7), and then sent to the data acquisition and processing module (7) through the communication systems. The diagnostic inference module (6) uses the knowledge stored in a knowledge base (10). The inference is performed using the current data, acquired using the data acquisition and processing module (7), concerning loads and operation of individual units exploited in the farm, and derived from the inspection of the structural elements, as well as historical data stored in the historical database (9). The diagnostic system management module plans which wind turbines are to be inspected and for which structural elements the inspection is to be carried out, i.e. whether the inspection is to be carried out only for the wind turbine tower or also for the blades. This planning can be implemented taking into account the weather data stored in the weather database (11) and in cooperation with external diagnostic systems (12). After planning a diagnostic task, the diagnostic system management module, in order to execute the task, sends suitable robots using the communication system (8) to transmit suitable control commands to their control systems.

The autonomous operation of the specialised robots (1), (2) and (3) is ensured by equipping them with: localization systems (1.6), (2.6) and (3.6), which send current data on location of the robots to the diagnostic system management module (5), and the environment detection systems (1.5), (2.5) and (3.5), which facilitate reaching the destination in a dynamically changing operational environment.

## Claims

1. The method for diagnosing the structural elements of the wind farm, **characterised in that** the inspection of the wind farm is carried out in an autonomous manner, wherein the diagnostic system management module (5), on the basis of the current data on the load and operation, as well as the data derived from the inspection of the structural elements, as well as the historical data stored in the historical database (9) and the weather database (11), plans in details the control tasks and wirelessly controls: the specialised inspection robot for inspecting the wind turbine blades (1), the specialised inspection robot for inspecting the wind turbine tower (2), the specialised transport robot (3) and the wind turbine's (4) turbine set in order to allow the inspection.

2. The method according to claim 1, **characterised in that** the transport robot autonomously performs transportation of a team of the inspection robots (1) for inspecting the wind turbine blades, and a team of the inspection robots for inspecting the wind turbine tower (2) between wind turbines at the wind farm, as well as their unloading and loading by means of the loading and unloading executive system (3.4).

3. The method according to claim 1, **characterised in that** the inspection robot for inspecting the wind turbine tower (2) performs transportation of the inspection robot (1) for inspecting the blades in the inspection start place, and the diagnostic system management module (5) controls the suitable arrangement of the wind turbine (4) blades in order to place the inspection robot on the wind turbine blade.

4. The system for diagnosing the structural elements of the wind farm, **characterised in that** one of its components is the diagnostic system management module (5), which using the communication system (8) wirelessly transmits control signals through the communication system (1.2) to the control system (1.1), which are located in the specialised inspection robot for inspecting the wind turbine blades (1), and through the communication system (2.2) to the control system (2.1), which are located in the specialised inspection robot for inspecting the wind turbine tower (2), and through the communication system (3.2) to the control system (3.1), which are located in the specialised transport robot (3), and through the communication system (4.2) to the control system (4.1), which are located on the wind turbine (4).

5. The system for diagnosing the structural elements of the wind farm, **characterised in that** one of its components is the data acquisition and processing module (7), which for the purposes of the diagnostic system management module (5) and using the communication system (8) wirelessly receives the data from the wind turbine inspection through the communication system (1.2) from the data acquisition and storage module (1.7), which is located in the specialised inspection robot for inspecting the wind turbine blades (1), and through the communication system (2.2) from the data acquisition and storage module (2.7), which is located in the specialised inspection robot for inspecting the wind turbine tower (2).
